# EUROPEAN PATENT SPECIFICATION

(11) **EP 3 528 354 B1**
(45) Date of publication and mention of the grant of the patent: **17.11.2021**
(21) Application number: 19157868.1
(22) Date of filing: 18.02.2019
(51) Int. Cl.: H02G 3/08

(54) **FLUSH ELECTRICAL BOX**
UNTERPUTZDOSE
BOÎTE ÉLECTRIQUE ENCASTRÉE

(30) Priority: 19.02.2018 IT 201800002831
(43) Date of publication of application: 21.08.2019
(73) Proprietor: Italy Innovazioni S.p.A., 00187 Roma (RM) (IT)
(72) Inventor: RENDE, Giorgio, 87064 CORIGLIANO CALABRO (CS) (IT)
(74) Representative: Monelli, Alberto

(56) References cited:
- EP-A1- 0 473 481
- EP-A2- 2 418 746
- US-A- 876 619
- US-A- 3 690 501
- US-A- 5 596 174
- US-A1- 2007 044 986

## Description

The present invention relates to a flush electrical box. There are known electrical boxes that are flush in holes previously arranged in walls or partitions. These boxes define a housing for the insertion of electrical fittings (typically electrical sockets or light switches). The boxes have a single body in plastic material shaped substantially like a parallelepiped and lacking one wall, through which the user can access the fittings. A cover frame then surrounds the fittings, masking the interface zone between the box and the wall.

These boxes have standardised dimensions. In particular, each box has a housing which makes it possible to accommodate a predetermined number of modules (typically one, two, three or four modules although in borderline cases they can also house six modules). Note that a module has a fixed, predetermined size which is well known to a person skilled in the art.

Consequently, an electrical box with the most appropriate dimensions will be used for each installation. A drawback of this solution is linked to the fact that each installer must be able to arrange a suitable supply of each type of box. When visiting a site to perform an intervention, the installer must bring a suitable assortment of variously sized boxes to avoid not having the model needed. More generally, there are problems connected to the maintenance of an adequate warehouse.

EP2418746, EP0473481, US876619, US5596174, US2007/044986 disclose an electrical box.

The object of the present invention is to propose a flush electrical box that makes it possible to overcome the above-illustrated drawbacks.

The stated technical task and specified objects are substantially achieved by a flush electrical box comprising the technical features set forth in one or more of the appended claims and which allows the maximum flexibility of use.

Further characteristics and advantages of the present invention will become more apparent from the following indicative and therefore non-limiting description of a flush electrical box as illustrated in the appended drawings, in which:
- figures 1-3 prospectively show three different configurations of a flush electrical box according to the present invention;
- figures 4-6 show the same box of figures 1-3 according to a different perspective, in three different configurations;
- figures 7-9 frontally show the same box of figures 1-6 in three different configurations;
- figures 10 and 11 show two components of the box of figures 1-9.

In the appended figures, reference number 1 denotes a flush box for electrical fittings such as electrical sockets or light switches.

The box 1 is telescopically extensible for varying dimensions of the housing 2 and for being able to accommodate a variable number of electric fittings. In particular the housing 2 makes it possible to accommodate a variable number of modules. For example a standard Italian socket occupies one module, while a Schuko socket occupies two modules. The housing 2 is substantially parallelepiped with a surface open toward the outside and the remaining parts delimited by the box 1. This open surface allows the insertion and extraction of the fittings. The housing 2 is extensible only along a first direction. This first direction is the width of the box 1, while the depth and the height of the box 1 remain fixed.

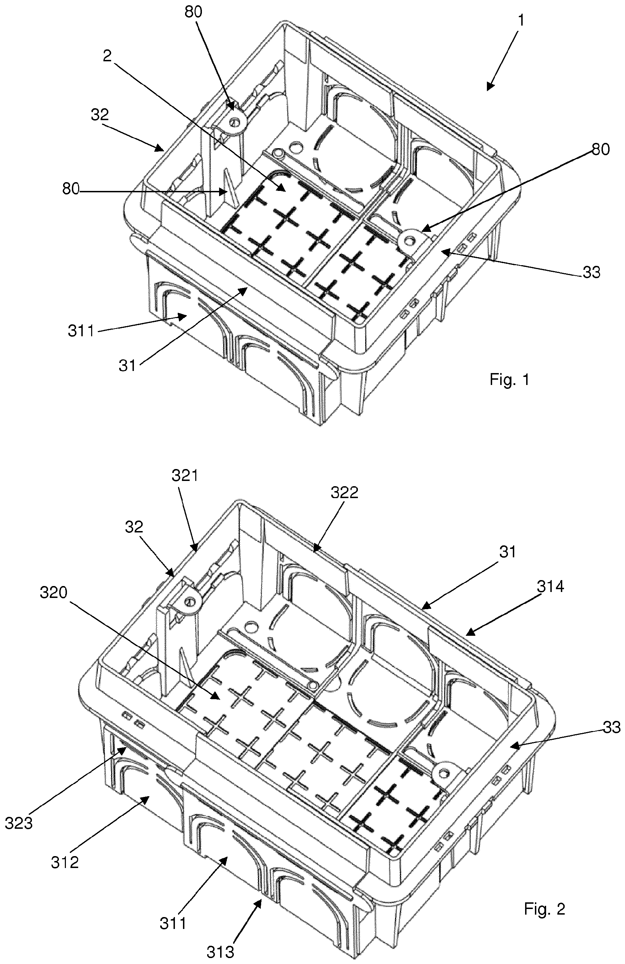

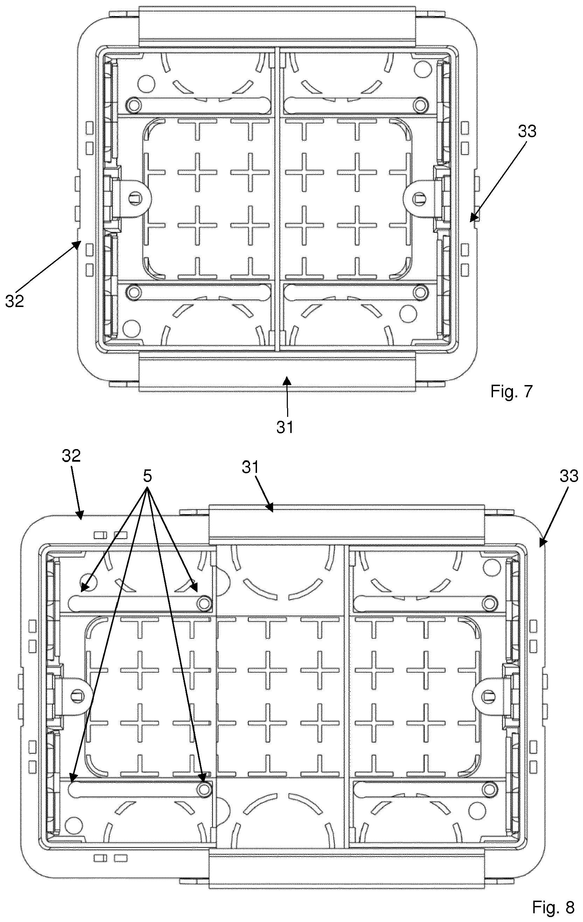

The box 1 further comprises a first body 31 and a second body 32. The second body 32 is telescopically movable with respect to the first body 31 between a first and a second position. The first position is illustrated in figures 1, 4 and 7.

In the second position (see figures 2, 3, 5, 6, 8, 9) the second body 32 extends away from the first body 31 to a greater extent than in the first position. In the first position the first body 31 could also be completely or almost completely inside the first body 31. In the second position the second body 32 is therefore more extracted than in the first position.

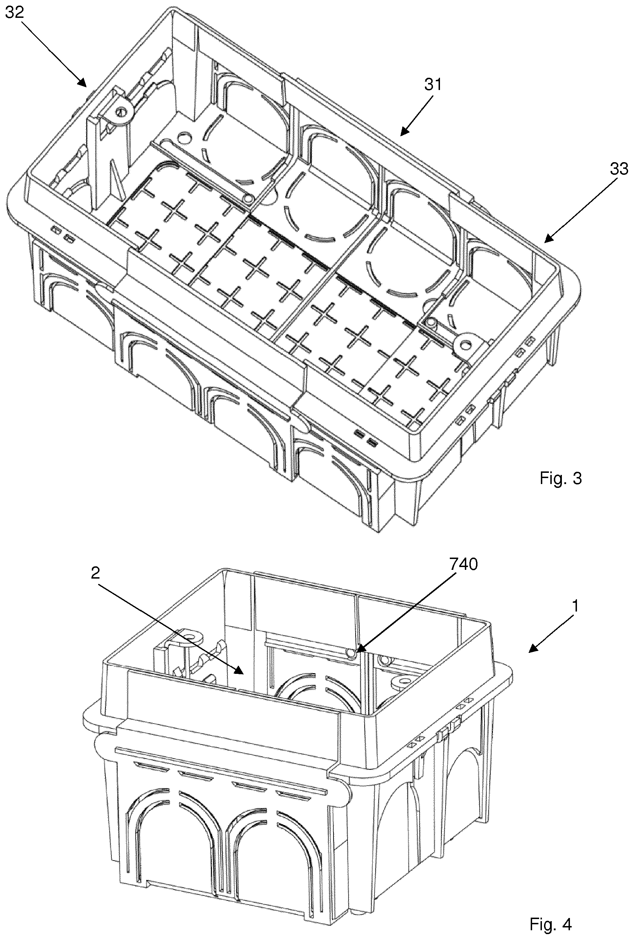

The box 1 comprises a third body 33 telescopically movable with respect to the first body 31 between a first and a second configuration. In the second position (see figures 3, 6, 9) the third body 33 extends away from the first body 31 to a greater extent than in the first configuration (1, 2, 4, 5, 7, 8). In the second configuration the third body 33 could also be completely or almost completely inside the first body 31. In the first position of the second body 32 and in the first configuration of the third body 33 the housing 2 is defined exclusively by the second and the third body 32, 33 while the first body 31 does not contribute as it is located behind the second and the third body 32, 33.

In the first position the second body 32 is closer to the third body 33 with respect to when it is in the second position (assuming that the third body 33 remains stationary in the first or second configuration). Suitably when the second body 32 is in the second position and the third body 33 is in the second configuration the box 1 assumes the maximum volume configuration (see figures 3, 6, 9). When the second body 32 is in the first position and the third body 33 is in the first configuration the box 1 assumes the minimum volume configuration; optionally in this minimal volume configuration the second and the third body 32, 33 could also be in contact with one another (see figures 1, 4, 7); in fact the inner edges of the second and the third body 32, 33 could be in contact; suitably in the maximum volume configuration this does not occur.

The first body 31 has a central body while the second and the third body 32, 33 are lateral bodies or extend laterally.

The third body 33 can be moved away (it is suitably removable) from the first body 31 in an opposite direction with respect to the direction in which the second body 32 can be moved away from the first body 31. The second and third body 32, 33 are slidable with respect to the first body 31. They move along the same direction. In this regard the second body 32 in combination with the first body 31 defines means 7 for guiding the sliding of the second body 32 with respect to the first body 31.

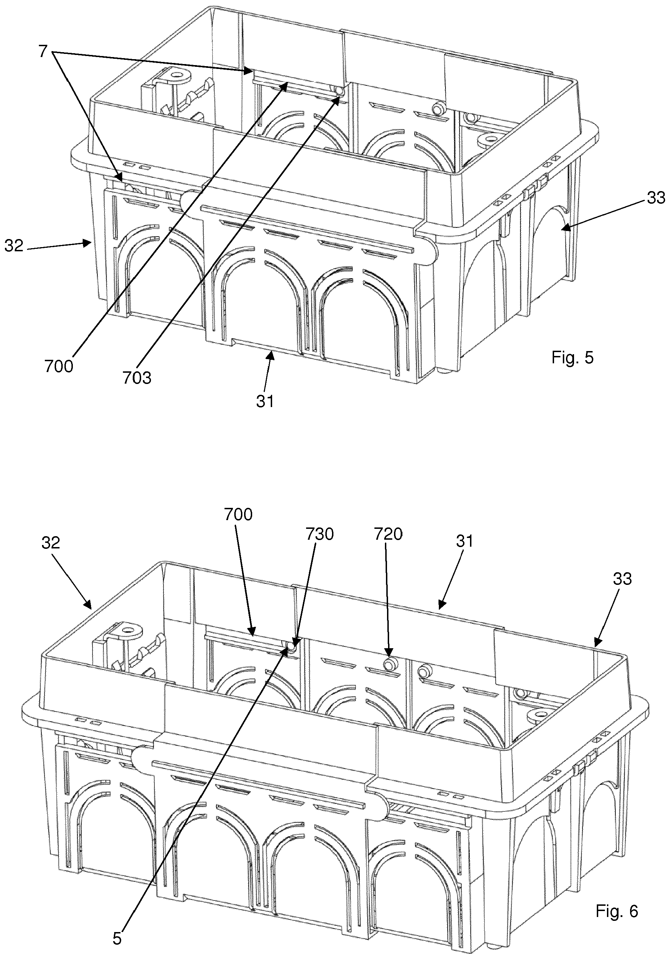

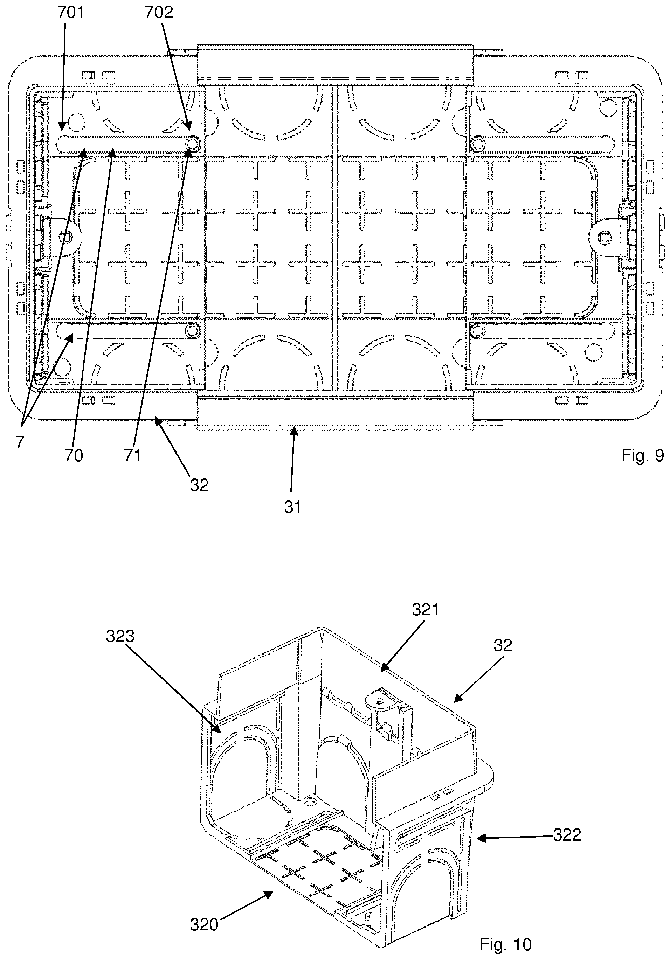

As exemplified in figure 9, the guide means 7 can comprise:
- a first groove 70 (advantageously fashioned in the second body 32);
- a first slider 71 slidable along the first groove 70 (this first slider 71 is advantageously solidly constrained to the first body 31). The first slider 71 can be a protrusion that engages in the first groove 70. Advantageously the guide means 7 comprise four grooves (indicated by reference number 7 and partly visible in figures 5 and 9). With reference to figure 5 or 6, a second groove 700 can be seen wherein a first and a second protrusion 720, 730 can be engaged. The first protrusion 720 is engaged when the second body 32 is in the first position; when the second body 32 moves toward the second position the first protrusion 720 disengages from the second groove 700 and the second protrusion 730 is engaged (as in figure 6).

The box 1 comprises means 5 for retaining the first and the second body 31, 32 in the first and/or second position. In this way the second body 32 remains stationary with respect to the first body 31, facilitating installation and transport. The application of a sufficient force will allow the disengagement of the retaining means 5, allowing the sliding of the second body 32 with respect to the first body 31.

For example the first groove 70 comprises a first and a second end enlargement 701, 702 (see for example figure 9). The first slider 71 in the first position of the second body 32 engages in the first enlargement 701, while in the second position of the second body 32 it engages in the second enlargement 702. The first slider 71 protrudes from the first or second enlargement 701, 702 by means of elastic deformation, using force to hold it in place.

The second groove 700 also comprises an end enlargement 740. In the first position of the second body 32 the first protrusion 720 engages in this enlargement end 740. In the second position of the second body 32 the second protrusion 730 engages in this enlargement end 740 (see figure 6). Also in this case the exit of the first or second protrusion 720, 730 from the enlargement end 740 takes place by means of an elastic deformation that occurs by overcoming a force holding the first or the second protrusion 720, 730 in its location.

As described with reference to the interaction between the first and the second body 31, 32, this can be repeated for the iteration between the first and the third body 31, 33.

The first, second and third bodies 31, 32, 33 together define an area suitable for accommodating the fittings.

The second and the third body 32, 33 are identical to one another. In this way the same mould can be used for the production of both. Furthermore, the second and the third body 32, 33 can be positioned in a specular manner with respect to the first body 31.

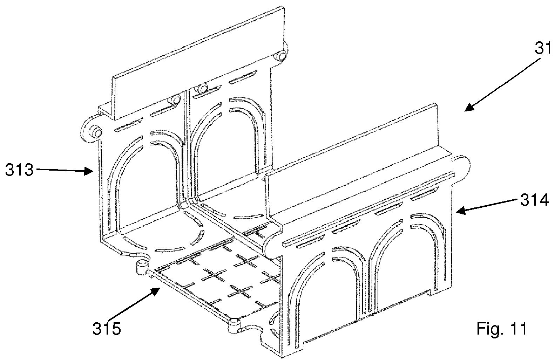

Suitably the first body 31 is C-shaped. In particular it comprises a central portion 315 from which two distinct tabs 313, 314 protrude from two opposite ends (see figure 11).

The second body 32 comprises (see for example figure 2):
- a bottom wall 320 which in the first position overlaps the first body 31 by at least 75%; and
- three transverse lateral walls 321, 322, 323 (substantially perpendicular) to one another. In the first position of the second body 32 two of said three lateral walls 321, 322, 323 overlap the first body 31. A third wall laterally delimits the housing 2.

The first body 31 comprises a first frangible zone 311 suitable for passage of an electric cable or a conduit which contains an electric cable (for example a corrugated conduit). The second body 32 comprises a second frangible zone 312 suitable for passage of an electric cable or a conduit which contains an electric cable (for example a corrugated conduit); in the first position of the second body 32 the first and the second frangible zones 311, 312 overlap one another. Preferably the first and the second frangible zone 311, 312 have the same perimeter. Advantageously the first and the second frangible zone 311, 312 have a pre-drilled perimeter that facilitates removal thereof. In this way in the first position a fitting that is located in the housing 2 of the box 1 can be achieved by means of an electrical connection which passes through both the first and the second frangible zone 311, 312.

In figure 2 the second frangible zone 312 is fashioned in one of the two tabs 313, 314 which extend from the central portion of the first body 31. The first frangible zone 311 is fashioned in one of the three transverse lateral walls (in particular 322, 323). An extensive frangible zone is also fashioned on the bottom wall 320 of the second body 32 and on the central portion 315 of the first body 31 (see the area full of crosses).

The box 1 defines a box for housing two modules, also in the minimum volume configuration.

The "two module" designation is well known in the technical field and indicates a predetermined size. Boxes with two modules are for example boxes of the type 502E Bticino.

In the solution shown by way of non-limiting example in figures 3, 6, 9 in the maximum volume configuration, the housing 2 makes it possible to accommodate four modules. The "four module" designation is well known in the technical field and indicates a predetermined size. Boxes with four modules are for example boxes of the type 504E Bticino.

If the second body 32 is in the second position and the third body 33 is in the first configuration, the housing makes is possible to accommodate three modules. This is similarly true if the second body 32 is in the first position and the third body 33 is in the first configuration. The "three module" designation is well known in the technical field and indicates a predetermined size. Boxes with three modules are for example boxes of the type 503E Bticino.

In an alternative embodiment not illustrated, the first body 31 could in turn be telescopic so as to be able to accommodate a greater number of modules. For example, in this way the box 1 can also accommodate six modules.

As indicated above, the first and the second body 31, 32 are slidable with respect to one another between the first and the second position. In particular the first and the second body 31, 32 can reciprocally translate.

In general the first, second and third bodies (if present) 31, 32, 33 are made of the same plastic material or regardless a resin. Suitably the first, second and third bodies (if present) 31, 32, 33 are moulded bodies. The walls of the first and/or second and/or third body 31, 32, 33 have a thickness of less than 2 millimetres.

As exemplified in the figure, the box 1 comprises at least one or more stiffening corners 8.

Moreover figure 1 shows two metallic plates 80 respectively assembled to the second and the third body 32, 33 for the passage of a connection screw (a feature which is common to all the boxes of this type).

The object of the present invention is also a system comprising:
- a flush box 1 having one or more of the characteristics described above;
- at least an electrical fitting and/or a light switch located in the housing of the box 1.

The present invention achieves important advantages.

Firstly, it makes it possible to use a single type of electrical box adaptable for all or regardless for most of the possible situations. This makes it unnecessary to keep stock of electrical boxes which are of an unusual size for a long time, or worse, allows not having them available when they are needed to be avoided. Furthermore the optimised geometry of the box's components makes it possible to keep costs at a minimum.

## Claims

1. A flush box having a housing (2) for electrical fittings such as electrical sockets or light switches, which is telescopically extensible for varying dimensions of said housing (2) and for being able to accommodate a variable number of electrical fittings; the housing (2) being extensible only along a first direction; the first direction being the width of the box (1), while the depth and the height of the box (1) remaining fixed; said box comprising a first body (31) and a second body (32), the second body (32) being telescopically movable with respect to the first body (31) between a first and a second position, the second body (32), in the second position, extending away from the first body (31) to a greater extent than in the first position;
the second body (32) comprises:
- a bottom wall (320) which in the first position overlaps the first body (31) by at least 75%; and
- three transverse lateral walls (321, 322, 323)
**characterised in that** it comprises a third body (33) that is telescopically movable with respect to the first body (31) between a first and a second configuration, the third body (33), in the second configuration, extending away from the first body (31) to a greater extent than in the first configuration;
the third body (33) can be moved away from the first body (31) in an opposite direction with respect to the direction in which the second body (32) can be moved away from the first body (31);
the third body (33) comprises:
i) a bottom wall which in the first configuration overlaps the first body (31) by at least 75%; and
ii) three transverse lateral walls.

2. The box of claim 1, **characterised in that** the second and the third body (32, 33) are identical to one another.

3. The box according to claim 1 or 2, **characterised in that** the first body (31) is C-shaped; the second body's three lateral walls (321, 322, 323) are substantially orthogonal to one another.

4. The box according to any one of claims from 1 to 3, **characterised in that** the first body (31) comprises a first frangible zone (311) suitable for passage of an electric cable or a conduit which contains the electric cable; said second body (32) comprises a second frangible zone (312) suitable for passage of an electric cable or a conduit which contains the electric cable; in the first position, the first and second zone (311, 312) overlapping one another.

5. The box according to any one of claims from 1 to 4, **characterised in that** the second body (32) is slidable with respect to the first body (31) between the first and the second position; the box (1) comprising retaining means (5) of the first and the second body (31, 32) in the first and/or the second position.

6. The box according to any one of claims from 1 to 5, **characterised in that** the second body (32) in combination with the first body (31) defines guide means (7) for guiding the sliding of the second body (32) with respect to the first body (31);
the guide means (7) comprising:
- a first groove (70);
- a first slider (71) slidable along the first groove (70);
the first groove (70) and the first slider (71) being one fashioned on the first body (31) and one fashioned on the second body (32).

7. The box according to any one of the preceding claims, **characterised in that** even in a minimum volume configuration it defines a housing box for two modules.

8. The box according to any one of the preceding claims, **characterised in that** the second and the third body (32, 33) can be positioned in a specular manner with respect to the first body (31).

9. A system comprising:
- a flush box (1) according to any one of claims from 1 to 8;
- at least an electrical socket and/or a light switch located in the housing of the box (1).

## Patentansprüche

1. Unterputzdose, aufweisend ein Gehäuse (2) für Elektro-Armaturen wie Steckdosen oder Lichtschalter, die zum Ändern der Abmessungen des Gehäuses (2) teleskopartig ausdehnbar ist und eine variable Anzahl von Elektro-Armaturen aufnehmen kann; wobei das Gehäuse (2) nur entlang einer ersten Richtung ausdehnbar ist; wobei die erste Richtung die Breite der Dose (1) ist, während die Tiefe und die Höhe der Dose (1) fest bleiben; wobei die Dose einen ersten Körper (31) und einen zweiten Körper (32) umfasst, wobei der zweite Körper (32) bezüglich des ersten Körpers (31) zwischen einer ersten und einer zweiten Position teleskopartig bewegbar ist, der zweite Körper (32) sich in der zweiten Position vom ersten Körper (31) wegführend in größerem Maße als in der ersten Position ausdehnt;
der zweite Körper (32) umfasst:
- eine Bodenwand (320), die in der ersten Position den ersten Körper (31) um mindestens 75 % überlappt; und
- drei seitliche Querwände (321, 322, 323),
**dadurch gekennzeichnet, dass** sie einen dritten Körper (33) umfasst, der bezüglich des ersten Körpers (31) zwischen einer ersten und einer zweiten Konfiguration teleskopartig bewegbar ist, wobei der dritte Körper (33) sich in der zweiten Konfiguration weiter vom ersten Körper (31) wegführend in größerem Maße als in der ersten Konfiguration ausdehnt;
der dritte Körper (33) kann vom ersten Körper (31) in einer entgegengesetzten Richtung bezüglich der Richtung wegbewegt werden, in der der zweite Körper (32) vom ersten Körper (31) wegbewegt werden kann;
der dritte Körper (33) umfasst:
i) eine Bodenwand, die in der ersten Konfiguration den ersten Körper (31) um mindestens 75 % überlappt; und
ii) drei seitliche Querwände.

2. Dose nach Anspruch 1, **dadurch gekennzeichnet, dass** der zweite und der dritte Körper (32, 33) miteinander identisch sind.

3. Dose nach Anspruch 1 oder 2, **dadurch gekennzeichnet, dass** der erste Körper (31) C-förmig ist; die drei Seitenwände (321, 322, 323) des zweiten Körpers sind im Wesentlichen orthogonal zueinander.

4. Dose nach einem der Ansprüche 1 bis 3, **dadurch gekennzeichnet, dass** der erste Körper (31) eine erste zerbrechliche Zone (311) umfasst, die zum Durchführen eines Elektrokabels oder einer das Elektrokabel enthaltenden Leitung geeignet ist; der zweite Körper (32) umfasst eine zweite zerbrechliche Zone (312), die zum Durchführen eines elektrischen Kabels oder einer das Elektrokabel enthaltenden Leitung geeignet ist; in der ersten Position überlappen sich die erste und die zweite Zone (311, 312).

5. Dose nach einem der Ansprüche 1 bis 4, **dadurch gekennzeichnet, dass** der zweite Körper (32) in Bezug auf den ersten Körper (31) zwischen der ersten und der zweiten Position verschiebbar ist; wobei die Dose (1) Haltemittel (5) des ersten und des zweiten Körpers (31, 32) in der ersten und/oder der zweiten Position umfasst.

6. Dose nach einem der Ansprüche 1 bis 5, **dadurch gekennzeichnet, dass** der zweite Körper (32) in Kombination mit dem ersten Körper (31) Führungsmittel (7) zum Führen der Verschiebung des zweiten Körpers (32) bezüglich des ersten Körpers (31) definiert;
wobei die Führungsmittel (7) umfassen:
- eine erste Nut (70);
- einen ersten Schieber (71), der entlang der ersten Nut (70) verschiebbar ist;
wobei die erste Nut (70) und der erste Schieber (71) jeweils die erste am ersten Körper (31) und der zweite am zweiten Körper (32) ausgebildet sind.

7. Dose nach einem der vorhergehenden Ansprüche, **dadurch gekennzeichnet, dass** sie selbst bei einer Konfiguration mit minimalem Volumen eine Gehäusedose für zwei Module definiert.

8. Dose nach einem der vorhergehenden Ansprüche, **dadurch gekennzeichnet, dass** der zweite und der dritte Körper (32, 33) gegenüber dem ersten Körper (31) spiegelnd positioniert werden können.

9. System, umfassend:
- eine Unterputzdose (1) nach einem der Ansprüche 1 bis 8;
- mindestens eine Steckdose und/oder ein Lichtschalter, der sich im Gehäuse der Dose (1) befindet.

## Revendications

1. Boîte encastrée, comportant un logement (2) pour des accessoires électriques tels que des prises électriques ou des interrupteurs d'éclairage, étant extensible de manière télescopique pour faire varier les dimensions dudit logement (2) et pouvant loger un nombre variable d'accessoires électriques ; le logement (2) étant extensible uniquement le long d'une première direction ; la première direction étant la largeur de la boîte (1), tandis que la profondeur et la hauteur de la boîte (1) restent fixes ;
ladite boîte comprenant un premier corps (31) et un deuxième corps (32), le deuxième corps (32) étant mobile de manière télescopique par rapport au premier corps (31) entre une première et une seconde position, le deuxième corps (32), dans la seconde position, se prolongeant en s'éloignant du premier corps (31) selon une plus grande mesure que dans la première position ; le deuxième corps (32) comprend :
- une paroi inférieure (320) qui, dans la première position, chevauche le premier corps (31) d'au moins 75 % ; et
- trois parois latérales transversales (321, 322, 323), **caractérisée en ce qu'**elle comprend un troisième corps (33) étant mobile de manière télescopique par rapport au premier corps (31) entre une première et une deuxième configuration, le troisième corps (33), dans la deuxième configuration, se prolongeant en s'éloignant du premier corps (31) selon une plus grande mesure que dans la première configuration ;
le troisième corps (33) peut être éloigné du premier corps (31) dans une direction opposée par rapport à la direction dans laquelle le deuxième corps (32) peut être éloigné du premier corps (31) ;
le troisième corps (33) comprend :
i) une paroi inférieure qui, dans la première configuration, chevauche le premier corps (31) d'au moins 75 % ; et
ii) trois parois latérales transversales.

2. Boîte selon la revendication 1, **caractérisée en ce que** le deuxième et le troisième corps (32, 33) sont identiques l'un à l'autre.

3. Boîte selon la revendication 1 ou 2, **caractérisée en ce que** le premier corps (31) est en forme de « C » ; les trois parois latérales (321, 322, 323) du deuxième corps sont substantiellement orthogonales entre elles.

4. Boîte selon l'une quelconque des revendications de 1 à 3, **caractérisée en ce que** le premier corps (31) comprend une première zone cassante (311) adaptée au passage d'un câble électrique ou d'un conduit qui contient le câble électrique ; ledit deuxième corps (32) comprend une deuxième zone cassante (312) adaptée au passage d'un câble électrique ou d'un conduit qui contient le câble électrique ; dans la première position, la première et la deuxième zone (311, 312) se chevauchent.

5. Boîte selon l'une quelconque des revendications de 1 à 4, **caractérisée en ce que** le deuxième corps (32) peut coulisser par rapport au premier corps (31) entre la première et la deuxième position ; la boîte (1) comprenant des moyens de retenue (5) du premier et du deuxième corps (31, 32) dans la première et/ou la deuxième position.

6. Boîte selon l'une quelconque des revendications de 1 à 5, **caractérisée en ce que** le deuxième corps (32) en combinaison avec le premier corps (31) définit des moyens de guidage (7) servant à guider le coulissement du deuxième corps (32) par rapport au premier corps (31) ; les moyens de guidage (7) comprenant :
- une première rainure (70) ;
- un premier coulisseau (71) pouvant coulisser le long de la première rainure (70) ;
la première rainure (70) et le premier coulisseau (71) étant l'une façonnée sur le premier corps (31) et l'autre façonné sur le deuxième corps (32).

7. Boîte selon l'une quelconque des revendications précédentes, **caractérisée en ce que** même dans une configuration de volume minimum, elle définit une boîte de logement pour deux modules.

8. Boîte selon l'une quelconque des revendications précédentes, **caractérisée en ce que** le deuxième et le troisième corps (32, 33) peuvent être positionnés de manière spéculaire par rapport au premier corps (31).

9. Système comprenant :
- une boîte encastrée (1) selon l'une quelconque des revendications de 1 à 8 ;
- au moins une prise électrique et/ou un interrupteur d'éclairage situé dans le logement de la boîte (1).
